# EUROPEAN PATENT APPLICATION

(11) **EP 2 662 186 A1**
(43) Date of publication of application: **13.11.2013**
(21) Application number: 11855182.9
(22) Date of filing: 07.01.2011
(51) Int. Cl.: B24B 27/06, B28D 5/04

(54) **METHOD AND APPARATUS FOR SCRIBING SILICON CARBIDE BOARD**

(71) Applicant: Bando Kiko Co., Ltd, Tokushima-shi Tokushima 770-0871 (JP)
(72) Inventor: BANDO, Kazuaki, Tokushima-shi Tokushima 770-0871 (JP)
(74) Representative: Jackson, Martin Peter
(86) International application number: PCT/JP2011/000061
(87) International publication number: WO 2012/093422

(57) **Abstract**

A scribing apparatus 1 includes a horizontal table 3 on which a silicon carbide plate 2 is fixed under vacuum suction; a feed screw 5 and a Y-axis control motor 6 for moving the table 3 along a pair of guide rails 4 under scribe numerical control; a guide rail device body 7 installed above the table 3 along an X-axis direction; a carriage 8 mounted on the guide rail device body 7 so as to move in the X-axis direction while being guided; a feed screw and an X-axis control motor 9 for moving the carriage 8 in the X-axis direction under numerical control; and a scribe head 10 installed on the carriage 8.

## Description

### TECHNICAL FIELD

The present invention relates to a method and apparatus for scribing a silicon carbide plate in which a scribe line is scribed on a silicon carbide plate by applying pressure to the silicon carbide plate by means of a cutter wheel and rolling the cutter wheel on the silicon carbide plate.

### BACKGROUND ART

Incidentally, a silicon carbide plate (SiC plate) or the like is high in its surface hardness, so that slippage of the cutter wheel is very likely to occur at the time of scribing (scribing a cut line), and the scribing of a scribe line for obtaining an effective vertical crack from a scribe starting point is difficult. If the silicon carbide plate or the like is bend-broken by applying a bending stress along the scribe line, splinters and the like are likely to occur starting from a discontinuous portion of a vertical crack at a scribe starting point and its vicinity.

### PRIOR ART DOCUMENT

### PATENT DOCUMENT

Patent Document 1: JP-A-2009-248267

### SUMMARY OF THE INVENTION

### PROBLEMS THAT THE INVENTION IS TO SOLVE

Accordingly, an object of the present invention is to provide a method and apparatus for scribing a silicon carbide plate which allow an effective vertical crack to be produced continuously from a scribe starting point.

### MEANS FOR SOLVING THE PROBLEMS

In accordance with the present invention, there is provided a silicon carbide plate scribing method comprising the steps of: first scribing a dent at a scribe starting point at the time of a scribing start; and starting scribing from within the dent.

In accordance with the present invention, there is also provided a silicon carbide plate scribing method comprising the steps of: first causing a cutter wheel to finely rotate or swing in a state in which the cutter wheel is brought into pressure contact with a silicon carbide plate at a scribe starting point at the time of a scribing start, to thereby scribe a dent at the starting point; and subsequently starting scribing from within the dent.

Further, in accordance with the present invention, there is provided a silicon carbide plate scribing method comprising the steps of: causing a diamond scribe stylus provided separately from a cutter wheel to be extended and to be brought into contact with a silicon carbide plate at a starting point at the time of a scribing start, to thereby scribe a dent; subsequently lowering the cutter wheel into the dent; and starting scribing from within the dent.

Furthermore, in accordance with the present invention, there is provided a scribing apparatus comprising: a scribe head having a cutter wheel and adapted to scribe a scribe line by rolling the cutter wheel in a state of being pressure contact with a silicon carbide plate; and a diamond stylus unit which has a diamond scribe stylus and causes the diamond scribe stylus to be brought into pressure contact with the silicon carbide plate to thereby scribe a dent.

It should be noted that the size (diameter) of the aforementioned dent is preferably made equal to or smaller than the size of the scribe line, but may be made greater than the size of the scribe line.

The silicon carbide plate in the present invention is used as such as a substrate (wafer) of a semiconductor device and a substrate of a device or the like of electronic equipment.

### ADVANTAGES OF THE INVENTION

At the time of a scribing start, a dent is first formed by scribing at a starting point, and the cutter wheel is made to start scribing from within the dent, so that an effective vertical crack is produced continuously from the starting point. For this reason, excellent bend-breaking is obtained over the entire scribe line including the starting point.

In addition, since the cutter wheel starts from within the dent, the center of the dent and the scribe line are aligned with each other.

### BRIEF DESCRIPTION OF THE DRAWINGS

Fig. 1 is a schematic front elevational view of a scribing apparatus in one example in which one example of a scribing method in accordance with the present invention is being carried out;
Fig. 2 is an explanatory diagram in which the scribing method in accordance with the present invention is being carried out with the scribing apparatus shown in Fig. 1;
Fig. 3 is an explanatory plan view of one example of scribe lines in accordance with the scribing method of the present invention;
Fig. 4 is an explanatory cross-sectional view of an essential portion of scribing in the scribing method in accordance with the present invention;
Fig. 5 is a schematic front elevational view of a scribing apparatus in another example in which another example of the scribing method in accordance with the present invention is being carried out;
Fig. 6 is a front elevational view of a scribe head and a diamond stylus unit of the scribing apparatus which carries out the scribing method of the present invention shown in Fig. 5;
Fig. 7 is a schematic front elevational view of an scribing apparatus in still another example in which still another example of the scribing method in accordance with the present invention is being carried out;
Fig. 8 is a schematic plan view of a silicon carbide plate cutting apparatus serving as a scribing apparatus in which a further example of the scribing method in accordance with the present invention is being carried out; and
Fig. 9 is a front elevational view of a cutter head which is carrying out the scribing method of the present invention shown in Fig. 8.

### MODE FOR CARRYING OUT THE INVENTION

Hereafter, a description will be given of the embodiments of the present invention with reference to the drawings. It goes without saying that since the scribing method in accordance with the present invention is carried out with a scribe head and a scribing apparatus, the scribing method in accordance with the present invention will be described through the embodiments of the scribing apparatus.

### First Embodiment

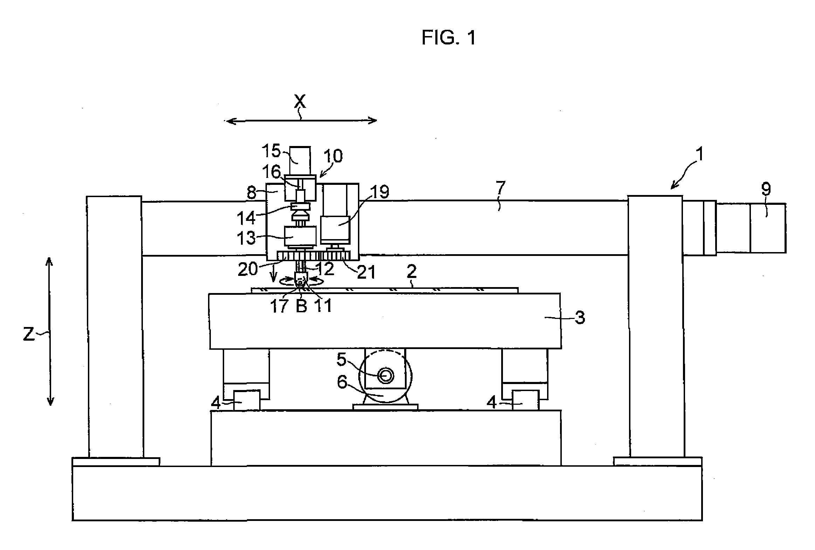

In Figs. 1 to 4, a scribing apparatus 1 is comprised of a horizontal table 3 on which a silicon carbide plate 2 is placed and fixed under vacuum suction; a parallel pair of guide rails 4 for guiding and supporting the table 3 so as to move horizontally in a Y-axis direction; a feed screw 5 and a Y-axis control motor 6 for moving the table 3 along the guide rails 4 under scribe numerical control; a guide rail device body 7 installed above the table 3 along an X-axis direction; a carriage 8 mounted on the guide rail device body 7 so as to move in the X-axis direction while being guided; a feed screw and an X-axis control motor 9 for moving the carriage 8 in the X-axis direction under numerical control; and a scribe head 10 installed on the front surface of the carriage 8.

The scribe head 10 includes a spline shaft 12 having a cutter wheel holder 11 at a lower end thereof; a rotary spline unit 13 for holding this spline shaft 12 at the center so that the spline shaft 12 is vertically movable and is also rotated; and an air cylinder unit 15 which is coupled to an upper end of the spline shaft 12 by means of a free rotating joint 14.

The main body of the air cylinder unit 15 is, as a matter of course, mounted on the carriage 8, and a piston rod 16 is coupled to the spline shaft 12 by means of the free rotating joint 14.

A cutter wheel 17 is provided in the cutter wheel holder 11. The axis of the cutter wheel 17 is, as a matter of course, provided eccentrically (backwardly with respect to the advancing direction) with respect to the axis of the spline shaft 12.

The spline shaft 12 held in the rotary spline unit 13 is vertically moved within the rotary spline unit 13 in a Z-axis direction (perpendicularly with respect to the surface of the silicon carbide plate 2) by the air cylinder unit 15. Additionally, during scribing, air pressure is imparted to the cutter wheel 17 in an orthogonal direction to the surface of the silicon carbide plate 2.

The spline shaft 12 is rotatively driven by the rotary spline unit 13.

An angle control motor 19 is provided laterally of the rotary spline unit 13.

The rotary spline unit 13 has a drive gear 20 for rotating the spline shaft 12. As this drive gear 20 is coupled in meshing engagement with a gear 21 mounted on the angle control motor 19, the spline shaft 12 and, hence, the cutter wheel 17 is rotated under angle control by this angle control motor 19. Namely, the blade surface of the cutter wheel 17 is subjected to angular control so as to face the scribing direction.

Hereafter, a description will be given of a first embodiment of the scribing method in accordance with the present invention which is carried out by this scribing apparatus 1.

Each time immediately before starting the operation for scribing a scribe line by rolling the cutter wheel 17, which is constituted by a sintered diamond wheel and preferably has a cutting tool angle of from 90° to 140° and a radius (wheel diameter) of from 2 mm to 3.5 mm, while applying air pressure thereto, the cutter wheel 17 is first lowered to a scribe starting point A, and is brought into pressure contact with the silicon carbide plate 2 with a blade edge load of, e.g., from 0.1 kg/cm² to 2 kg/cm². In this state of pressure contact, the cutter wheel 17 is finely rotated or swung to thereby form a dent B at this starting point A. As shown in Figs. 1 to 4, starting from within this dent B, the cutter wheel 17 is made to start scribing in the state of pressure contact, to thereby scribe a continuous scribe line C which started from the dent B.

This method is one in which each time the scribe line C is formed, the dent B is formed by scribing at the starting point A, and scribing is started from this dent B.

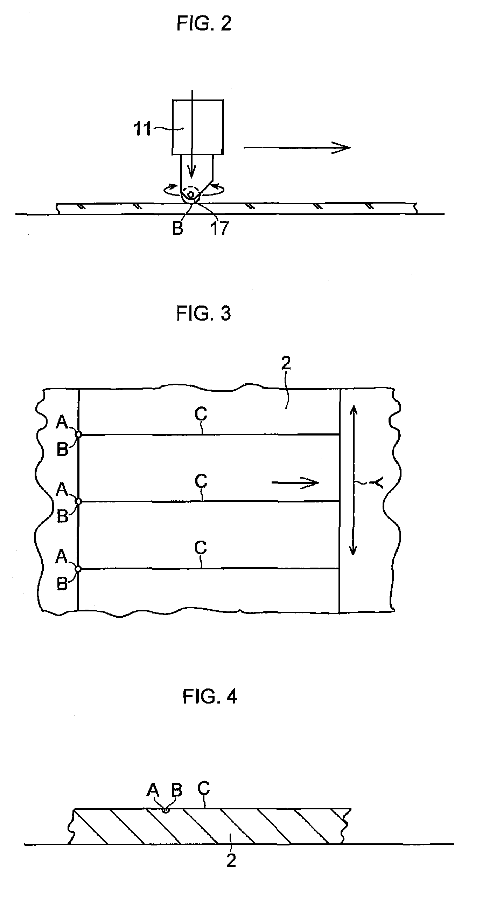

It should be noted that the size (diameter) of the dent B is made equal to or smaller than the size of the scribe line C. In Fig. 3, the dent is depicted to be large for explanation's sake.

Thus, as scribing is effected from within the dent B formed by scribing at the starting point A, it is possible to produce a continuous vertical crack from the dent (starting point A) without the occurrence of slippage of the cutter wheel from the starting point A, thereby making it possible to obtain excellent bend-breaking.

In addition, since the cutter wheel 17 starts from the dent B, the center of the dent B and the scribe line C are aligned with each other.

### Second Embodiment

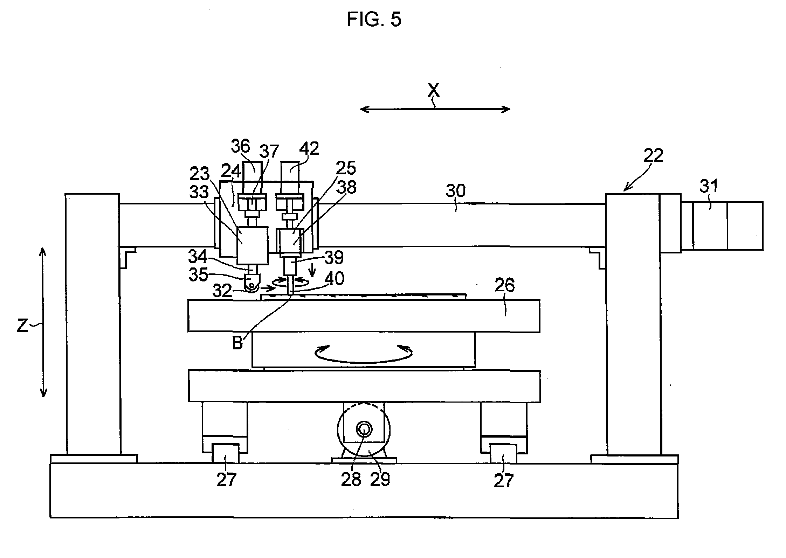

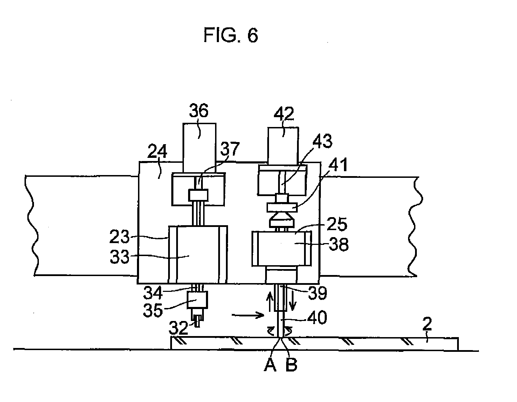

In Figs. 5 and 6, a scribing apparatus 22 has a diamond stylus unit 25 disposed on the front surface of a carriage 24 in juxtaposition with a scribe head 23 which is also mounted thereon.

The diamond stylus unit 25 is exclusively used in the scribe formation of the dent B on the silicon carbide plate 2 at the time of a scribing start. The scribing apparatus 22 in this embodiment is comprised of a table 26 on which the silicon carbide plate 2 placed thereon is fixed under vacuum suction, and which rotates horizontally; a parallel pair of guide rails 27 for guiding and supporting the table 26 so as to move horizontally in the Y-axis direction; a feed screw 28 and a Y-axis control motor 29 for moving the table 26 along the guide rails 27 under numerical control; a guide rail device body 30 installed above the table 26 along the X-axis direction; the carriage 24 mounted on this guide rail device body 30 so as to move in the X-axis direction while being guided; a feed screw and an X-axis control motor 31 for moving the carriage 24 in the X-axis direction under numerical control; the scribe head 23 installed on the front surface of the carriage 24; and the diamond stylus unit 25 similarly disposed on the front surface of the carriage 24 in lateral juxtaposition with the scribe head 23. In the scribing apparatus 22, the scribe head 23 has at its lower end a cutter wheel 32 which is constituted by a sintered diamond wheel and preferably has a cutting tool angle of from 90° to 140° and a radius (wheel diameter) of from 2 mm to 3.5 mm. However, the scribing apparatus 22 is not provided with an angle control unit for rotating the cutter wheel 32 about an axis perpendicular to the silicon carbide plate 2. This scribing apparatus 22 effects scribing in the X-axis direction along the guide rail device body 30.

This scribe head 23 also causes the cutter wheel 32 to roll in a state of being brought into pressure contact with the silicon carbide plate 2 by means of air pressure with a blade edge load of, e.g., from 0.1 kg/cm² to 2.0 kg/cm², to thereby scribe a scribe line. Namely, the scribe head 23 includes a slide bush body 33 mounted on the front surface of the carriage 24, a vertically moving body 34 held by the slide bush body 33 so as to be vertically movable, a cutter wheel holder 35 provided at a lower end of the vertically moving body 34, and an air cylinder unit 36 coupled to an upper end of the vertically moving body 34.

The cutter wheel holder 35 is provided with the cutter wheel 32. An upper end of the vertically moving body 34 is coupled to a piston rod 37 of the air cylinder unit 36.

The vertically moving body 34 is vertically moved by the air cylinder unit 36, and, during scribing, the cutter wheel 32 is brought into pressure contact with the silicon carbide plate 2 with a blade edge load of, e.g., from 0.1 kg/cm² to 2.0 kg/cm² by receiving pressure from the air cylinder unit 36 by means of the vertically moving body 34, and is thereby rolled in conjunction with the movement of the carriage 24 to effect scribing.

Meanwhile, the diamond stylus unit 25 is constituted by a DD motor 38 having a hollow shaft mounted on the front surface of the carriage 24; a spline shaft 39 held slidably in the hollow shaft to receive rotative drive; a diamond scribe stylus 40 provided at a lower end of the spline shaft 39; and an air cylinder unit 42 coupled to an upper end of the spline shaft 39 by means of a free rotating joint 41, a piston rod 43 of the air cylinder unit 42 being coupled to the spline shaft 39.

In terms of the operation of the diamond stylus unit 25, as the spline shaft 39 is extended toward the silicon carbide plate 2 by the air cylinder unit 42, the diamond scribe stylus 40 at the distal end is brought into pressure contact with the silicon carbide plate 2. Concurrently, the diamond scribe stylus 40 at the distal end is finely rotated by driving the DD motor 28, thereby forming the dent B.

Instead of the vertical movement by the air cylinder unit 42, the diamond scribe stylus 40 or the entire diamond stylus unit 25 may be moved vertically by a linear motor or a servo motor.

The scribing method which is carried out by this scribing apparatus 22 will be described below.

Each time a scribe line is scribed on the silicon carbide plate 2, at the time of its scribing start the diamond stylus unit 25 is first positioned at the scribe starting point A, and the diamond stylus unit 25 is operated. The diamond scribe stylus 40 at the distal end is brought into pressure contact at the starting point A by extending the spline shaft 39, and the diamond scribe stylus 40 is finely rotated or swung, thereby forming the dent B at this starting point A.

Simultaneously with the formation of the dent B, the diamond scribe stylus 40 is withdrawn. Next, the cutter wheel 32, in turn, is moved to and positioned at the position (starting point A) where the dent B has been formed. The cutter wheel 32 is then extended and brought into pressure contact with the silicon carbide plate 2 within the dent B with a blade edge load of, e.g., from 0.1 kg/cm² to 2.0 kg/cm². In this state, scribing is started from within the dent B, and the scribe line C is scribed continuously from the dent B.

It should also be noted that the size (diameter) of the dent B is normally made equal to or smaller than the size of the scribe line C, but may be made greater than the same.

### Third Embodiment

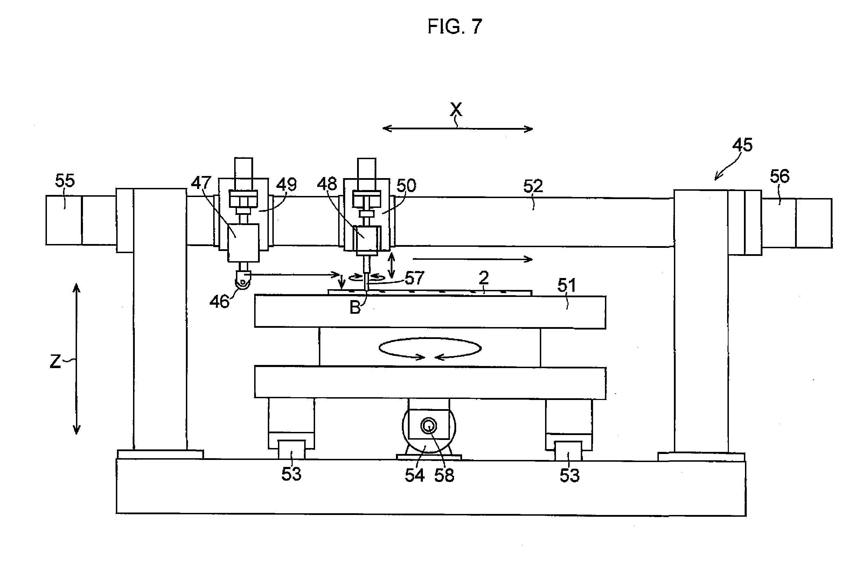

In Fig. 7, in a scribing apparatus 45 in accordance with this embodiment, a scribe head 47 having a cutter wheel 46, which is constituted by a sintered diamond wheel and preferably has a cutting tool angle of from 90° to 140° and a radius (wheel diameter) of from 2 mm to 3.5 mm, and adapted to scribe the scribe line C by rolling the cutter wheel 46 in a state of being pressure contact with the silicon carbide plate 2 with a blade edge load of, e.g., from 0.1 kg/cm² to 2.0 kg/cm², on the one hand, and a diamond stylus unit 48 for exclusively effecting the scribe formation of the dent B on the silicon carbide plate 2, on the other hand, are made independent of each other and are respectively mounted on separate carriages 49 and 50.

The respective carriages 49 and 50 are independently mounted on a guide rail device body 52 installed above a table 51, and are adapted to move independently of each other. Namely, the scribe head 47 and the diamond stylus unit 48 move independently of each other.

In addition, the respective structures and the operation of the scribe head 47 and the diamond stylus unit 48 may be the same as the structures and operation of the scribe head 23 and the diamond stylus unit 25 of the scribing apparatus 22 shown in the foregoing second embodiment.

Also in the same way as in the second embodiment, the scribing apparatus 45 is comprised of the table 51 on which the silicon carbide plate 2 placed thereon is fixed under vacuum suction, and which rotates horizontally; a parallel pair of guide rails 53 for guiding and supporting this table 51 so as to move horizontally in the Y-axis direction; a feed screw 58 and a Y-axis control motor 54 for moving the table 51 along the guide rails 53 under numerical control; the guide rail device body 52 installed above the table 51 along the X-axis direction; the two carriages 49 and 50 mounted on the guide rail device body 52 so as to move in the X-axis direction while being guided; a feed screw and one X-axis control motor 55 for moving one carriage 49 in the X-axis direction under numerical control; a feed screw and another X-axis control motor 56 for moving the other carriage 50 similarly in the X-axis direction under numerical control; the aforementioned scribe head 47 installed on the front surface of the one carriage 49; and the aforementioned diamond stylus unit 48 disposed on the front surface of the other carriage 50.

In the same way as the diamond stylus unit 25 in the second embodiment the diamond stylus unit 48 has a diamond scribe stylus 57 at its distal end, and the diamond scribe stylus 57 is adapted to extend toward the silicon carbide plate 2, is brought into pressure contact therewith, is finely rotated or swung to thereby scribe the dent B.

The scribing method which is carried out by this scribing apparatus 45 will be described below.

Each time a scribe line is scribed on the silicon carbide plate 2, at the time of its scribing start the diamond stylus unit 48 is first moved to and positioned at the scribe starting point A, and this diamond stylus unit 48 is immediately operated to thereby form the dent B by scribing at the starting point A. After the formation of the dent B, the diamond stylus unit 48 immediately returns to its original position. Next, the scribe head 47, in turn, is moved to and positioned at the position (starting point A) where the dent B has been formed. Its cutter wheel 46 is then extended and brought into pressure contact with the silicon carbide plate 2 within the dent B with a blade edge load of, e.g., from 0.1 kg/cm² to 2.0 kg/cm². In this state, scribing is started from within the dent B, and the scribe line C is scribed continuously from the dent B.

It goes without saying that the size (diameter) of the dent B is made equal to or smaller than the size of the scribe line C, but may be made greater than the scribe line.

### Fourth Embodiment

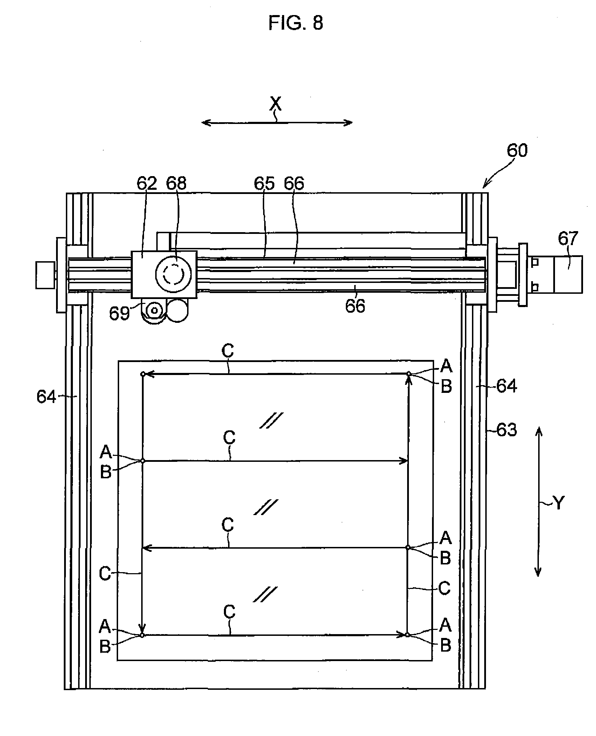

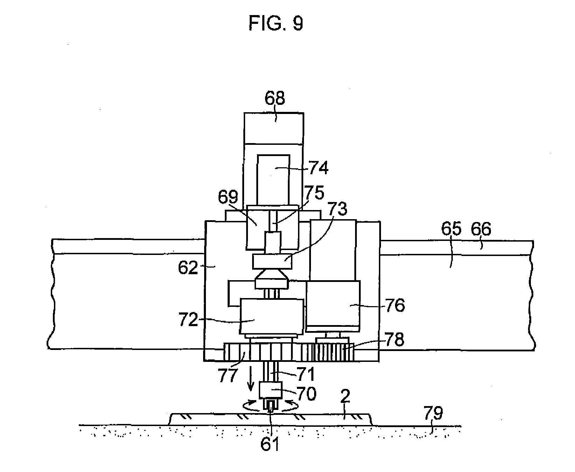

In Figs. 8 and 9, with this silicon carbide plate cutting apparatus 60, a carriage 62 provided with a cutter wheel 61, which is constituted by a sintered diamond wheel and preferably has a cutting tool angle of from 90° to 140° and a radius (wheel diameter) of from 2 mm to 3.5 mm, moves in a planar coordinate system by being subjected to NC control. Accordingly, the cutter wheel 61 moves by being subjected to NC control in an orthogonal coordinate system.

As shown in Fig. 8, a pair of guide rails 64 are provided on a base 63 along the Y axis, and a moving base 65 is moved in the Y-axis direction by the guide rails 64. Further, a pair of guide rails 66 being along the X axis are provided on the moving base 65. The carriage 62 is movable in the X-axis direction by these guide rails 66. The moving base 65 is moved in the Y-axis direction under numerical control by a Y-axis control motor 67 and a meshing rack device or a feed screw.

The carriage 62 on the moving base 65 is moved in the X-axis direction under numerical control by an X-axis control motor 68 and a meshing rack device or a feed screw.

Accordingly, the carriage 62 is positionally controlled in the X-axis direction and the Y-axis direction, and the cutter wheel 61 mounted on the carriage 62 moves along a preprogrammed locus of movement. Hereafter, as shown in Fig. 9, a cutter head 69, which is also a scribe head, is mounted on the front surface of the carriage 62.

The cutter head 69 includes a spline shaft 71 having a cutter wheel holder 70 at a lower end thereof; a rotary spline unit 72 for holding the spline shaft 71 at the center so that the spline shaft 71 is vertically movable and is also rotated; and an air cylinder unit which is coupled to an upper end of the spline shaft 71 by means of a free rotating joint 73. The main body of the air cylinder unit 74 is mounted on the carriage 62, and a piston rod 75 is coupled to the spline shaft 71 by means of the free rotating joint 73.

The cutter wheel 61 is provided in the cutter wheel holder 70. The axis of the cutter wheel 61 is provided eccentrically (backwardly with respect to the advancing direction) with respect to the axis of the spline shaft 71.

The spline shaft 71 held in the rotary spline unit 72 is vertically moved within the rotary spline unit 72 in the Z-axis direction (perpendicularly with respect to the surface of the silicon carbide plate 2) by the air cylinder unit 74.

During scribing, air pressure is imparted to the cutter wheel 61 in an orthogonal direction to the surface of the silicon carbide plate 2. In addition, the spline shaft 71 is rotatively driven by the rotary spline unit 72. An angle control motor 76 is provided laterally of the rotary spline unit 72.

The rotary spline unit 72 has a drive gear 77 for rotating the spline shaft 71. As this drive gear 77 is coupled in meshing engagement with a gear 78 mounted on the angle control motor 76, the spline shaft 71 and, hence, the cutter wheel 61 is rotated under angle control by this angle control motor 76.

Namely, the blade surface of the cutter wheel 61 is subjected to angular control so as to face the scribing direction. The silicon carbide plate 2 is placed on a table 79 provided on the base 63, and is sucked and fixed, as required.

Hereafter, a description will be given of the scribing method in accordance with the present invention which is carried out by this scribing apparatus 1.

Each time immediately before starting the operation for scribing a scribe line by rolling the cutter wheel 61 while applying air pressure thereto, the cutter wheel 61 is first lowered to the scribe starting point A, and is brought into pressure contact with the silicon carbide plate 2 with a blade edge load of, e.g., from 0.1 kg/cm² to 2 kg/cm². In this state of pressure contact, the cutter wheel 61 is finely rotated or swung to thereby form the dent B by scribing at this starting point A. Next, starting from within this dent B, the cutter wheel 61 is made to start scribing in the state of pressure contact, to thereby scribe the continuous scribe line C which started from the dent B.

This method is one in which each time the scribe line C is formed, the dent B is formed by scribing at the starting point A, and scribing is started from this dent B.

Thus, as scribing is effected from within the dent B formed by scribing at the starting point A, it is possible to produce a continuous vertical crack from the dent (starting point A) without the occurrence of slippage of the cutter wheel from the starting point A, thereby making it possible to obtain excellent bend-breaking.

In addition, since the cutter wheel 61 starts from the dent B, the center of the dent B and the scribe line C are aligned with each other.

## Claims

1. A silicon carbide plate scribing method comprising the steps of: first scribing a dent at a scribe starting point at the time of a scribing start; and starting scribing from within said dent.

2. A silicon carbide plate scribing method comprising the steps of: first causing a cutter wheel to rotate or swing in a state in which said cutter wheel is brought into pressure contact with a silicon carbide plate at a scribe starting point at the time of a scribing start, to thereby scribe a dent at the starting point; and subsequently starting scribing from within said dent.

3. A silicon carbide plate scribing method comprising the steps of: first causing a diamond scribe stylus provided separately from a cutter wheel to rotate or swing in a state in which said diamond scribe stylus is brought into pressure contact with a silicon carbide plate at a scribe starting point at the time of a scribing start, to thereby scribe a dent; subsequently causing said cutter wheel to be brought into pressure contact with the silicon carbide plate at the dent formed; and starting scribing from within said dent.

4. A scribing apparatus comprising: a scribe head having a cutter wheel and adapted to scribe a scribe line by rolling said cutter wheel in a state of being pressure contact with a silicon carbide plate; and a diamond stylus unit which has a diamond scribe stylus and causes said diamond scribe stylus to be brought into pressure contact with the silicon carbide plate to thereby scribe a dent.
